Europäisches Patentamt

(19) European Patent Office

Office européen des brevets

(11) Publication number: **0 013 635**

**A1**

(12) # EUROPEAN PATENT APPLICATION

(21) Application number: **80300148.6**

(22) Date of filing: **16.01.80**

(51) Int. Cl.³: **B 29 H 19/00**

(30) Priority: **16.01.79 JP 3635/79**

(43) Date of publication of application:
**23.07.80 Bulletin 80/15**

(84) Designated Contracting States:
**DE FR GB**

(71) Applicant: **JAPAN SYNTHETIC RUBBER CO., LTD.**
**11-24, Tsukiji-2-chome Chuo-ku**
**Tokyo(JP)**

(71) Applicant: **THE JAPAN STEEL WORKS, LTD.**
**12-1, Yurakucho-1-chome, Chiyoda-ku**
**Tokyo(JP)**

(72) Inventor: **Harada, Kunihiro**
**2657-6, Naruse**
**Machida-shi(JP)**

(72) Inventor: **Kasai, Kiyoshi**
**29, Aobadai-2-chome**
**Midori-ku Yokohama(JP)**

(72) Inventor: **Maki, Yoshiki**
**660616, Oaza Yaguchi**
**Koyocho Hiroshima-shi(JP)**

(72) Inventor: **Oda, Norimasa**
**2009-1, Funakoshicho**
**Aki-ku Hiroshima-shi(JP)**

(74) Representative: **Ruffles, Graham Keith et al,**
**MARKS & CLERK 57-60 Lincoln's Inn Fields**
**London WC2A 3LS(GB)**

(54) **Method and apparatus for producing rubber melt.**

(57) When pieces of rubber are melted and decomposed in a screw extruder, a rubber melt can be produced without necessarily using a heavy oil and with minimized evolution of gas, this result being achieved by controlling the extruder cylinder temperature in a decomposition section of the screw within the range of 400° to 500°C and cooling the melt in the discharge section of the screw to a temperature of not more than 250°C. A screw extruder suited for practising this method comprises a screw (1) having a feed section (A), a compression section (B), a decomposition section (C) and a discharge section (D) which are arranged in that order from the inlet (9), and a cylinder assembly (4) consisting of a heating cylinder (5) and a cooling cylinder (6) arranged in that order from the inlet (9), the feed compression and decomposition section (A,B and C) of the screw (1) being located to correspond to said heating cylinder (5), and the discharge section (D) of the screw (1) being located to correspond to said cooling cylinder (6)

EP 0 013 635 A1

1.

"METHOD AND APPARATUS FOR PRODUCING RUBBER MELT".

This invention relates to a method and apparatus for producing a rubber melt. More particularly, it relates to a method and apparatus for producing a rubber melt of high industrial utility by treating rubber both mechanically and thermally.

Rubber waste comprising mainly waste tyres is now posing a serious social problem, as also does plastics waste. Although many extensive studies are being conducted in the search for an effective way for disposal or utilization of such rubber waste, there is as yet no available effective and economical method for mass utilization of the rubber waste, except for the possibility of processing it into reclaimed rubber. The bulk of rubber waste is either buried in the ground or incinerated. Under such circumstances, there is a need to develop a method and apparatus for enabling the effective recycling of rubber waste, the main source of which is waste tyres.

Attention has been directed to a dry distillation method (such as proposed recently in Japanese Patent Publication No 8354/77) as an effective means for the treatment of rubber waste. According to this method, vulcanized rubber is thermally decomposed at $400^\circ$ to $900^\circ$C to separate it into three phases, that is, gas oil, and a solid residue. The gas and oil are put to reuse

2.

as fuel while the solid residue is utilized as a source for various types of useful carbon materials or utilized as coke fuel. This method, however, is low in throughput capacity for its vast equipment and maintenance costs and the estimated value of the products is also low. Therefore, this method has a problem of economics.

In order to solve such problems, there has been proposed a method which is totally different in principle from such conventional methods and in which a screw extruder is used for producing a vulcanized rubber melt (Japanese Patent Publication No. 43873/76). The point of this new method is that small pieces of vulcanized rubber are heated in a screw extruder together with at least 25 parts by weight of a heavy oil or of the product vulcanized rubber melt per 100 parts by weight of said small pieces of rubber, the heating being at a temperature of $310^{\circ}$ to $380^{\circ}$C in the presence of air to decompose the vulcanized rubber. According to this method, however, the heavy oil or vulcanized rubber melt must be added in an amount of at least 25 parts by weight per 100 parts by weight of the small pieces of vulcanized rubbers, and therefore, there are required means for supplying the heavy oil or for recycling the melt, and furthermore substantial throughput of vulcanized rubber is limited.

The most important factors in melting the rubber by a screw extruder are that the produced melt has a moderate viscosity and that the degree of melting is as high as substantially 100%.

When the melt viscosity is too high, problems arise in treatment of the melt for some uses, while a low degree of melting, which means the existence of non-melted matter, brings about unfavourable results in the use of the rubber melt. Particularl when such a melt is used as a rubber compounding agent, the existence of the non-melted matter may cause a deterioration in physical properties

The present inventors have conducted extensive studies aiming at the efficient and economic production of a useful rubber melt by use of a screw extruder with no essential need for supply of a heavy oil or for recycling of the rubber melt. They have found as a consequence that an efficient melting of the rubber can be accomplished by melting and decomposing the rubber in a screw extruder at a cylinder temperature of $400^{\circ}$ to $500^{\circ}C$ and cooling the resulting rubber melt to a temperature of not more than $250^{\circ}C$ before it is discharged out of the extruder.

Thus, according to this invention, there is provided a method for producing a rubber melt by melting and decomposing rubber in a screw extruder, wherein the cylinder temperature in the decomposition section of the screw is kept at $400^{\circ}$ to $500^{\circ}C$ and the resulting rubber melt is cooled to a temperature of not more than $250^{\circ}C$ in the discharge section of the screw.

According to this invention there is further provided apparatus for producing a rubber melt. The apparatus comprises a screw extruder consisting of a cylinder, a screw, an inlet and a discharge port. The screw has a feed section, a compression section, a decomposition section and a discharge section which are arranged in that order from the inlet. The cylinder is made up of a heating cylinder and a cooling cylinder, with the heating cylinder being located in correspondence with the feed, compression and decomposition sections of the screw and the cooling cylinder being located in correspondence with the discharge section of the screw.

When the method of this invention is carried out using apparatus of this invention, the supplied rubber contacts the high-temperature inner wall of the cylinder at the decomposition

4.

section of the screw whereby the rubber is partially reduced to an oily state to promote melting, while the produced gas is cooled and at least partially condensed at the discharge section and extruded out together with the melt. Thus, the method of this invention is capable of efficiently melting the rubber with no need for using a heavy oil, and also the emission of gas from the extruder is minimized, whereby a safe and stable operation is made possible.

The rubber used in this invention may be of all sorts of general-purpose rubber or special rubber which may be either vulcanized or unvulcanized. More specifically, suitable rubbers include automobile tyres, commercial rubber products and their waste, scrap rubber (either vulcanized or raw) produced in rubber plants, etc. In general, rubber is employed which preferably has a particle size below 50 mm, for example from 2 to 5 mm. with the size being variable to suit the extruder employed.

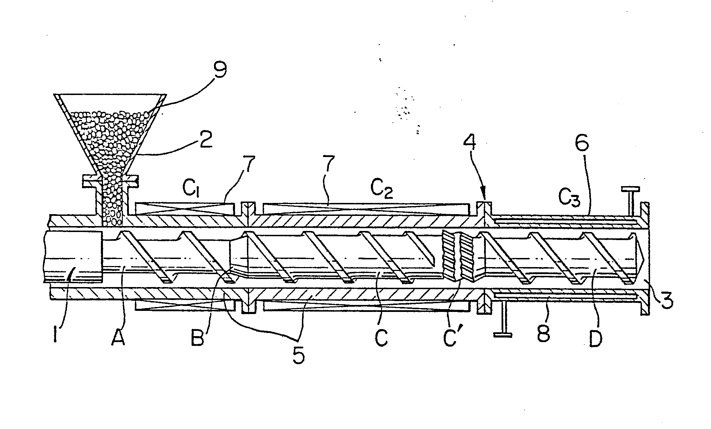

By way of example, a method and apparatus of this invention are described in detail with reference to the accompanying drawing which is a front sectional view schematically illustrating an embodiment of the apparatus used for practising a rubber melting method of this invention.

In the drawing, a screw extruder has a screw 1 and an inlet 2 shown as a hopper. The screw 1 has a feed section A, a compression section B a decomposition section C and a discharge section D arranged in that order from the inlet end toward the extruder outlet 3. The cylinder assembly 4 of the screw extruder consists of a heating cylinder 5 located in correspondence with the feed compression and decomposition sections A, B and C of the screw and a cooling cylinder 6 located in correspondence with the discharge section D. The heating cylinder 5 is divided into two zones $C_1$ and $C_2$. The zone $C_2$ which corresponds to the

5.

decomposition section C of the screw 1 is heated to $400^{\circ}$ to $500^{\circ}C$. If the temperature of the zone $C_2$ is below $400^{\circ}C$, substantially no conversion into oil and gas of the rubber occurs at the decomposition section C, so that sufficient melting becomes impossible with an increase of the throughput, resulting in a low degree of melting of the obtained melt. On the other hand, if the zone $C_2$ is heated to a temperature above $500^{\circ}C$, carbides with high hardness are formed and deposit on the internal wall of the cylinder or on the screw surface to cause an obstruction, whereby the operation of the extruder is made impossible. The zone $C_1$, corresponding to the feed section A and the compression section B of the screw 1, is preferably heated to $200^{\circ}$ to $350^{\circ}C$. Heating of the zone $C_1$ to more than $300^{\circ}C$ might be desirable with regard to the degree of melting, but it causes the rubber to bite or bind, resulting in a reduction in throughput. The heating cylinder 5 may be heated by an electrical means or a heating medium 7.

Temperature control of the rubber melt at the extruder outlet 3 in the cooling cylinder 6 is important. If the temperature of the melt at this point is more than $250^{\circ}C$, the low-boiling-point components might be emitted together with the non-melted portion of rubber from the extruder outlet, resulting in an excessive rise in viscosity of the rubber melt and a drop in the degree of melting. Therefore, it is necessary that the rubber melt at the extruder outlet 3 be controlled to a temperature at which low-boiling-point matter produced in the decomposition section C condenses. When the low-boiling matter condenses, the viscosity of the rubber melt drops accordingly, and simultaneously the ejection of the non-melted material is prevented, whereby the degree of melting is increased. As aforementioned, an excessively high viscosity of the rubber melt is undesirable in some uses, and from the viewpoint of effective utilization of the melt, it is desirable in most cases that the melt viscosity is not more than 2,000,000 centipoises. In order to raise the degree of melting to about 100% and to keep the melt viscosity below said level, it is necessary to control the rubber melt temperature at the extruder outlet to not more than 250°C. Cooling cylinder 6 may be cooled by supplying water (or other coolant) to the jacket 8 provided around the cylinder. Cooling of the discharge section D of the screw 1 may be effected jointly with cooling of the cooling cylinder 6, or only the discharge section D need be cooled, without cooling the cylinder 6. In this latter case, care should be taken so as not to cool other parts of the screw: this can be well accomplished by providing a support means at the screw end and introducing cooling water into the discharge section D of the screw 1 through said support means. Having regard to productivity, it is preferred that the temperature of the rubber melt at the discharge section is 50° to 250°C.

In practising the present invention, pieces of rubber 9 are first supplied from the inlet 2 to the feed section A of the screw 1 and thence transferred to the compression section B.

The size of the rubber pieces is not critical, as long as the rubber can pass to the feed section A. Usually comminuted or crushed rubber pieces of 2.50 mm are fed to the inlet, but the size can be varied depending on the size of the extruder, type of screw etc.

The compression section B is sealed by the transferred rubber pieces so as to prevent backflow of the low-boiling matter from the decomposing section C. When using ordinary screw extruders, the minor diameter of the compression section is increased to the decomposition section in order to provide the desired sealing. In this case, however, it is recommended to employ a free charge system, in which the rubber is supplied into the hopper as a rate higher than the feeding capacity of the screw.

Use of a controlled charge system, in which the rubber is supplied at a constant rate within the range below the feeding capacity of the screw, may be unable to provide sufficient sealing to prevent backflow.

The rubber material transferred from the compression section B to the decomposition section C is heated to 400° to 500°C to effect partial thermal decomposition and dry distillation to form the low-boiling matter. In seeking perfect melting of the rubber, it is necessary for the decomposition section C to have sufficient length, and it is also desirable to provide a shearing means C' such as a Dulmage head or a ring on the discharge side of the decomposition section C to give a strong shearing force to the rubber melt. The rubber melt is then transferred to the discharge section D together with the low-boiling matter and cooled sufficiently in this section. Consequently, low-boiling matter condenses therein and is perfectly mixed up with the rubber melt, and the melt mixture is extruded out of the extruder at a temperature of not more than 250°C. The discharge section D needs to have a sufficient length to allow the melt to cool down to not more than 250°C and to allow the low-boiling matter to be properly mixed with the rubber melt.

Therefore, it is preferred that the length of each section of the screw is as follows: Letting the inner diameter of the cylinder be $\underline{d}$, the preferred length of the feed section A is $7\underline{d}$ to $11\underline{d}$, the preferred length of the compression section B is $1\underline{d}$ to $5\underline{d}$, the preferred length of the decomposition section C is $10\underline{d}$ to $18\underline{d}$ and the preferred length of the discharge section D is $8\underline{d}$ to $14\underline{d}$. If the length of the feed section A is less than $7\underline{d}$, the feeding capacity is usually decreased, resulting in a reduction in the extruder's capacity for treating the pieces of rubber and bringing about a reduction in the discharge capacity. If the length of the compression section B is more than $5\underline{d}$, the melting of the rubber is often caused too early, whereby the rubber melt is wound around the screw. Then, it is impossible to enhance the melt-discharging capacity of the screw even by increasing the number of revolutions of the screw. If the length of the decomposing section C is less than $10\underline{d}$, it is difficult sufficiently to melt the rubber. If the length of the discharge section D is less than $8\underline{d}$, the mixing of the condensed product of the low-boiling matter generated in the decomposition section C with the rubber melt can become inadequate. In particular, in the decomposing section C, it is preferable to provide a shearing section C', having a length of $2\underline{d}$ to $6\underline{d}$. The total screw length is preferably $28\underline{d}$ to $45\underline{d}$ to give good rubber melting efficiency and ease in manufacturing the screw.

The screw used may be either a single-screw or a twin-screw. The twin-screw is preferred as the staggered flights of the respective screws can scrape down the solid residues which may otherwise deposit on the screw surface to cause an obstruction.

For obtaining a rubber melt with a still lower viscosity, a heavy oil or the resulting rubber melt may be charged into the screw extruder together with the small pieces of rubber to be treated, as proposed in, for instance, Japanese Patent Publication No. 43873/76.

The rubber melt obtained according to this invention finds a variety of industrial uses. For instance, it may be used as a rubber compounding agent, a binder, a colouring agent for rubber and plastics products, an asphalt modifier, a coating material, etc.

Listed below are features and advantages of the described embodiment of this invention:

(1)    Rubber can be melted without the need to add a heavy oil or the like.

9.

(2)     A rubber melt can be produced continuously and stably in a large amount by using a screw extruder.

(3)     The degree of melting of rubber can be raised to nearly 100%.

(4)     The melt viscosity at $100^{o}C$ can be kept at not more than 2,000,000 centipoises.

(5)     The equipment and maintenance costs for the treating system can be low.

This invention is described below in further detail referring to Examples, which are merely by way of illustration and not by way of limitation.

Examples 1 to 3 and Comparative Examples 1 to 6.

Used automobile tyres (carbon black content: 33%) were divided into small pieces with a size of 3 to 5 mm in diameter by a crusher and charged into an extruder as shown in the accompanying drawing. The inner diameter of the extruder cylinder was 90 mm. With the inner diameter of the cylinder referred to as $d$, the total screw length was $40d$, the length of the feed section A was $9d$, the length of the compression section B was $3d$, the length of the decomposition section C was $16d$, and the length of the discharge section D was $12d$. Of the length of $16d$ of the decomposition section C, $4d$ was allotted to a Dulmage head.

The melting conditions and the properties of the obtained melts in the Examples of this invention and in the Comparative Examples (conventional methods) were as shown in the following table 1.

10.

Table 1

| | | Cylinder temp (°C) | | | Screw speed (rpm) | Capacity (kg/H) |
|---|---|---|---|---|---|---|
| | | $C_1$ | $C_2$ | $C_3$ | | |
| Examples | 1 | 300 | 450 | Water cooling | 80 | 85 |
| | 2 | 300 | 450 | Water cooling | 120 | 115 |
| | 3 | 300 | 410 | Water cooling | 80 | 105 |
| Comparative Examples | 1 | 300 | 450 | 450 | 80 | 85 |
| | 2 | 300 | 450 | 450 | ·80 | 82 |
| | 3 | 300 | 350 | 300 | 80 | 86· |
| | 4 | 300 | 400 | 300 | ·80 | 66 |
| | 5 | 300 | 400 | Note (4) | 80 | 78 |
| | 6 | 300 | 450 | Note (4) | 80 | 50 |

Notes:

(1)    Free charge system was used in Examples 1 to 3 and Comparative Examples 1 and 3 to 6.  Controlled charge system by a feeder was used in Comparative Example 2.

(2)    The degree of melting was determined in the following way:  the melt was dissolved in toluene and filtered by a 200-mesh

| Dis-charge temp (°C) | Degree of melting (%) | C con-tent (%) | Viscosity ( cp ) at 100°C |
|---|---|---|---|
| 196 | 100 | 33.2 | 1,380,000 |
| 201 | 100 | 33.0 | 1,770,000 |
| 132 | 91.2 | 33.2 | 1,530,000 |
| 382 | 77.4 | 38.5 | Unmeasurable |
| 407 | 98.5 | 43.1 | Unmeasurable |
| 335 | 27.7 | 33.5 | Unmeasurable |
| 343 | 27.9 | 33.8 | Unmeasurable |
| 262 | 89.5 | 34.1 | Unmeasurable |
| 312 | 90.5 | 35.7 | Unmeasurable |

(table 1 continued/...)

Notes (continued):

wire gauze, and the ratio of the melt which passed through the wire gauze to the total specimen was measured. The carbon black content was measured according to JIS-K 6350.

(3)     The melt viscosity in the Comparative Examples was too high (above 12,000,000 cp) for measurement.

(4)     No cooling water was passed through the jacket 8 of the cooling cylinder 6 in the extruder .

. 12.

As for the operational conditions, in the Comparative Examples voluminous and intermittent gas ejection occurred to produce a dangerous situation, and the melt was discharged in sudden bursts. On the other hand, in the Examples of this invention, gas evolution was slight and the melt was discharged continuously, and generally a stabilized operation was possible.

1.

CLAIMS:

1.    A method for producing a rubber melt by melting and decomposing rubber in a screw extruder, characterized in that the temperature of the length of cylinder (5) corresponding to a decomposition section (C) of the screw (2) is kept at $400^{\circ}$ to $500^{\circ}C$, and the resulting melt is cooled to a temperature of not more than $250^{\circ}C$ in a discharge section (D) of the screw (2).

2.    A method according to claim 1, wherein the rubber used is a general-purpose rubber or special rubber, vulcanized or unvulcanized.

3.    A method according to claim 1 or 2, wherein the rubber used comprises automobile tyres, commercial rubber products or their waste, or vulcanized or raw scrap rubber produced in rubber plants.

4.    A method according to claim 1, 2 or 3, wherein the screw extruder is a single-screw or twin-screw extruder.

5.    A method according to claim 4, wherein the screw extruder is a twin-screw extruder.

6.    A method according to any preceding claim, wherein the temperature of the length of cylinder corresponding to a feed section (A) and a compression section (B) before the decomposition section (C) of the screw (1) is kept at 200 to $350^{\circ}C$.

7.    A method according to any preceding claim wherein the compression section (B) is sealed against backflow by the particles of rubber transferred thereto.

2.

8. A method according to any preceding claim, wherein the particles of rubber are melted in the extruder together with a heavy oil or product rubber melt.

9. Apparatus for producing a rubber melt comprising a screw extruder with a cylinder (4), a screw (1), an inlet (2) and a discharge port (3), the screw (1) having a feed section (A), a compression section (B), a decomposition section (C) and a discharge section (D) arranged successively in that order from the inlet end and the cylinder (4) consisting of a heating cylinder (5) located in correspondence with the feed section (A), compression section (B) and decomposition section (C) of the screw (1) and a cooling cylinder (6) located in correspondence with the discharge section (D) of the screw (1).

10. Apparatus according to claim 9, wherein the cooling cylinder (6) has a jacket (8) for supply of coolant.

11. Apparatus according to claim 8 or 9, wherein the screw (1) has at the discharge end of the extruder a support means designed for introduction of coolant therethrough into the discharge section (D) of the screw (1).

12. Apparatus according to claim 9, 10 or 11, wherein a shearing means (C') is provided on the discharge side of the decomposition section (D) of the screw.

13. Apparatus according to claim 12, wherein the shearing means (C') is a Dulmage head or a ring.

14. Apparatus according to any of claims 9 to 13, wherein the screw is a single or twin screw.

15. Apparatus according to claim 14, wherein the screw is a twin screw.

16. Apparatus according to any of claims 9 to 15, wherein the total screw length is 28 to 45 times the inner diameter of the cylinder, the length of the feed section (A) of the screw (1) is 7 to 11 times the inner diameter of the cylinder, the length of the compression section (B) of the screw (1) is 1 to 5 times the inner diameter of the cylinder, the length of the decomposition section (C) of the screw (1) is 10 to 18 times the inner diameter of the cylinder, and the length of the discharge section (D) of the screw (1) is 8 to 14 times the inner diameter of the cylinder.

17. Apparatus according to claim 16, wherein the decomposition section (C) of the screw (1) has a shearing means (C') having a length of 2 to 6 times the inner diameter of the cylinder.

European Patent
Office

**EUROPEAN SEARCH REPORT**

Application number

EP 80 30 0148

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| | PATENT ABSTRACT OF JAPAN, vol. 2, no. 81, 28th June, 1978, page 1134 C 78 Tokyo, JP <br><br> & JP - A - 53 40043 (NIPPON GOSEI GOMU.) <br><br> * Whole abstract * <br><br> -- | 1-5,8 | B 29 H 19/00 |
| D <br> A | JP - B - 43 873 (25-11-1976) <br><br> & DERWENT PUBLICATIONS JAPANESE PATENTS REPORT, vol. 76, no. 49, page 2 issued 07-01-1977. <br><br> -- | | **TECHNICAL FIELDS SEARCHED (Int.Cl ³)** <br><br> B 29 H 19/00 <br> C 08 J 11/00 |
| D <br> A | JP - A - 8 354 (08-03-1977) <br><br> & DERWENT PUBLICATIONS JAPANESE PATENTS REPORT, vol. 77, no. 10, page 92 issued 08-04-1977. <br><br> -- | | |
| A | FR - A - 2 287 320 (SUMITOMO ELECTRIC INDUSTRIES) | | |
| A | US - A - 2 730 759 (G.J. GLAS) | | **CATEGORY OF CITED DOCUMENTS** |
| A | GB - A - 729 825 (U.S. RUBBER RECLAIMING) <br><br> ---- | | X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| | The present search report has been drawn up for all claims | | &: member of the same patent family, corresponding document |
| Place of search <br> The Hague | Date of completion of the search <br> 18-04-1980 | Examiner <br> FRIDEN | |

EPO Form 1503.1  06.78